Europäisches Patentamt

European Patent Office

Office européen des brevets

(19)

(11) Veröffentlichungsnummer: **0 020 949**
**B1**

(12) **EUROPÄISCHE PATENTSCHRIFT**

(45) Veröffentlichungstag der Patentschrift:
05.05.82

(51) Int. Cl.³: **B 01 D 46/04,** B 01 D 46/46

(21) Anmeldenummer: **80102408.4**

(22) Anmeldetag: **03.05.80**

(54) Einrichtung zur Überwachung der Schliess- und Öffnungsfunktionen von Membranventilen, insbesondere von Membranventilen, die in Abreinigungsimpulsleitungen von Entstaubungseinrichtungen einem Druckluftspeicher nachgeschaltet sind.

(30) Priorität: **22.06.79 DE 2925128**

(43) Veröffentlichungstag der Anmeldung:
**07.01.81 Patentblatt 81/1**

(45) Bekanntmachung des Hinweises auf die Patenterteilung:
**05.05.82 Patentblatt 82/18**

(84) Benannte Vertragsstaaten:
**BE FR IT SE**

(56) Entgegenhaltungen:
**DE-A-1 507 768**
**DE-A-2 248 995**
**DE-A-2 709 204**
**DE-A-2 715 749**
**DE-A-2 725 435**
**US-A-3 073 097**
**US-A-3 394 532**
**US-A-4 116 156**

(73) Patentinhaber: **Mannesmann Demag AG,
Wolfgang-Reuter-Platz, D-4100 Duisburg (DE)**

(72) Erfinder: **Brüderle, Egon Ulrich, Wackenpfad 13,
D-6660 Zweibrücken (DE)**

(74) Vertreter: **Flaig, Siegfried, Mannesmann AG
Mannesmannufer 2, D-4000 Düsseldorf (DE)**

ACTORUM AG.

Einrichtung zur Überwachung der Schliess- und Öffnungsfunktionen von Membranventilen, insbesondere von Membranventilen, die in Abreinigungsimpulsleitungen von Entstaubungseinrichtungen einem Druckluftspeicher nachgeschaltet sind

Die Erfindung betrifft eine Einrichtung zur Überwachung der Schliess- und Öffnungsfunktionen von Membranventilen, insbesondere von Membranventilen, die in Abreinigungsimpulsleitungen von Entstaubungseinrichtungen einem Druckluftspeicher nachgeschaltet sind, die jeweils mittels Elektromagnetventilen steuerbar sind.

Membranventile haben anstelle des elektrischen Antriebs einen Membranantrieb, der mit Steuerluft oder Steuerflüssigkeit beaufschlagt wird. An der Membranhaube ist ein Magnetdreiwege- oder Magnetumsteuerventil befestigt. Bei spannungslosem Magneten wird der Zugang zum Raum oberhalb der Membrane abgesperrt und eine Druckfeder hält das Membranventil in Schliessstellung. Bei unter Spannung stehendem Magneten strömt die Steuerluft über die Membrane. Die Öffnungskraft überwindet sowohl die Kraft der Druckfeder als auch die von unten auf den Ventilteller gerichtete Kraft.

Membranventile für sich sind relativ betriebssicher, vom Ausnahmefall des Bruches der Membran abgesehen. Im Fall der Zerstörung der Mambran bricht der Druck des Luftverdichters zusammen, so dass die Kompressorensteuerung den Schaden anzeigt. Ein anderer Fall liegt vor, wenn das Elektromagnetventil den erteilten Steuerbefehl nicht ausführt. Ein solcher Störungsfall tritt beispielsweise bei Ausfall der Steuerspule des Magnetventils, bei Verschmutzung, bei Klemmen des Steuerkolbens oder bei Stromausfall in der Steuerleitung auf. In der Verfahrenstechnik, wie z.B. in der noch zu behandelnden Abgasreinigungstechnik führen Störungen zur Unterbrechung des Produktionsvorganges. Wenn auch Störungen der Steuermittel nicht immer ganz auszuschliessen sind, wird doch eine frühe Erkennung angestrebt, um etwa entstehenden Schaden innerhalb der Produktion geringzuhalten.

Der Erfindung liegt die Aufgabe zugrunde, die Funktionen der Membranventile in der Form zu überwachen, dass eine Störung angezeigt wird.

Diese Aufgabe wird erfindungsgemäss dadurch gelöst, dass am Membranventilgehäuse bzw. am Gehäuse des Druckluftspeichers ein Schwingungen bzw. Geräusche aufnehmender Impulsgeber befestigt ist und dass die abgegebenen Impulse mit programmierten Einzelsteuerungssignalen für die Magnetventile einzeln vergleichbar sind. Die Erfindung nutzt das bei der Beschleunigung der Luft entstehende Geräusch für die Prüfung der Funktionsfähigkeit des Membranventils. Das Öffnen des Membranventils erzeugt durch den impulsförmigen Druckluftaustritt aus dem Druckluftspeicher, der auf 40 bis 100 ms begrenzt ist, einen Körperschallimpuls, der deutlich höher liegt als alle Grundgeräusche. Die Erfindung prüft nicht die Funktionsfähigkeit des Membranventils als solche, sondern effektiv das Schliessen oder Öffnen des Ventils, aus dem sicher geschlossen werden kann, ob Druckluft freigegeben wird. Die erfindungsgemässe Überwachungseinrichtung arbeitet daher unabhängig vom Zustand des Elektromagnetventils, wobei erkannt wurde, dass die Störmeldung und Überwachung des Elektromagnetventils in Abhängigkeit von der Erregung keine Aussage über die erfolgte Bewegung des Steuerkolbens und die Freigabe des Ventilquerschnitts für die Steuerluft ergeben. Eine Druckmessung hinter dem Membranventil könnte ebensowenig die Erfindungsaufgabe lösen, da innerhalb der kurzen Zeit ein Druckabfall mit vertretbarem Aufwand nicht gemessen werden kann.

Nach der weiteren Erfindung ist vorgesehen, dass der Impulsgeber aus einem Körperschall-Mikrofon besteht. Ein solches Mikrofon kann leicht an der Stelle der typischen Geräuschentwicklung beim Aufbau einer Druckluftströmung angebracht werden.

Die erfindungsgemässe Einrichtung kann auf verschiedenen Gebieten angewendet werden. Bei Anwendung in einer Entstaubungseinrichtung sind entweder jeder Druckluftspeicher oder jedes Membranventil, die einer Filterkammer zugeordnet sind, mit einem Impulsgeber versehen, ferner sind die Impulsgeber an einen Ladungsverstärker und dieser an einen Impulswandler angeschlossen und ausserdem ist das ermittelte Signal im Vergleich mit der Magnetventilsteuerung als Anzeige einer Störmeldung erkennbar gemacht. Die Störmeldung kann dabei optisch, akustisch oder aufgrund einer Aufzeichnung sichtbar gemacht werden.

Die Erfindung ist ferner dahingehend weitergebildet, dass die Membranventile ausgangsseitig mit den Spüldüsen von Filterkammern der Entstaubungseinrichtung verbunden sind, wobei jeweils mehrere Filterschläuche einer Filterkammer und jeder Filterkammer zumindest ein Membranventil zugeordnet sind.

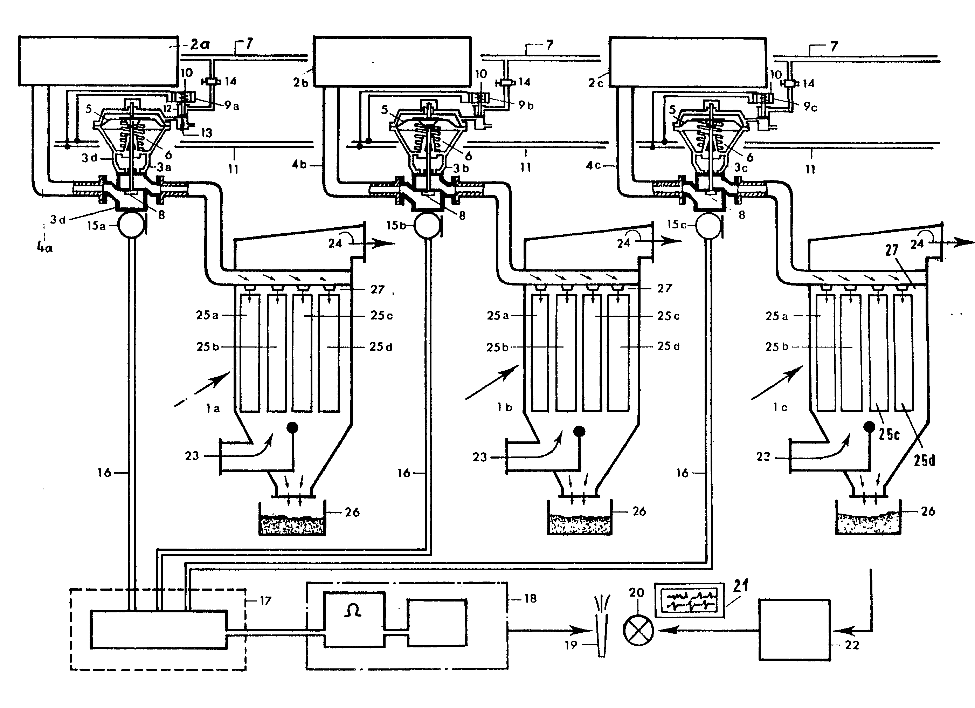

Ein Ausführungsbeispiel der Erfindung ist in der Zeichnung dargestellt und wird im folgenden näher beschrieben.

Das Ausführungsbeispiel zeigt den Einsatz der Überwachungseinrichtung in einer Entstaubungseinrichtung der metallurgischen Industrie. Eine Entstaubungseinrichtung besitzt u.a. ein Filter, das im vorliegenden Fall aus drei Filterkammern 1a, 1b und 1c gebildet ist. Jede der Filterkammern ist an einen der Druckluftspeicher 2a, 2b und 2c angeschlossen. Zwischen Filterkammer und Druckluftspeicher befindet sich das zu überwachende Membranventil 3a, 3b und 3c. Die Membranventile 3 (a, b, c) geben die Rohrleitungen 4a, 4b, 4c frei, wenn die Membrane 5 entgegen der Kraft der Druckfeder 6 und dem Druck des Druckluftspeichers 2 (a, b, c) mit Steuerluft aus der Steuerluftleitung 7 beaufschlagt wird, so dass der Ventilteller 8 nach unten öffnet. Die Steuerung der Membranventile 3 (a, b, c) erfolgt mittels der Elektromagnetventile 9a, 9b, 9c, die an die Steuerluftleitung 7 angeschlossen sind. Die Magnetspule 10 ist an die Steuerleitung 11 angeschlossen und umgibt die Kolbenstange 12. Der Kolben 13 verschliesst oder öffnet je nach Stellung die Steuerluftleitung 7. Für den Aus- und Einbau des Magnetventils 9 (a, b, c) befindet sich ein Absperrventil 14 in der Verbindungsleitung zur Steuerluftleitung 7.

Wie erfindungsgemäss vorgeschlagen, ist am Membranventilgehäuse 3d jeweils ein Impulsgeber 15a, 15b, 15c befestigt, der ebenso an den Rohrleitungen 4 (a, b, c) oder an den Druckluftspeichern 2 (a, b, c) angeordnet sein kann. Der genaue Befestigungsort richtet sich nach der Fortpflanzung der Beschleunigungsgeräusche der Druckluft im Werkstoff der Rohrleitung 4 (a, b, c) bzw. des Gehäuses der Druckluftspeicher 2 (a, b, c) beim Öffnen des Membranventils 3 (a, b, c). Sämtliche Impulsgeber 15 (a, b, c) verbinden Kabel 16 mit dem Ladungsverstärker 17, in dem der Impuls verstärkt und dem Impulswandler 18 zugeführt wird. Der Impulswandler 18 erzeugt ein etwa rechteckförmiges Ausgangssignal, das einer akustischen Anzeige 19 oder einer optischen Anzeige 20 oder einem Schreibgerät 21 im Vergleich mit der Magnetventilsteuerung 22 zugeführt wird. Die Magnetventilsteuerung 22 besteht aus einer frei programmierbaren Steuerung, die erlaubt, die einzelnen Membranventile 3 (a, b, c) über die Elektromagnetventile 9 (a, b, c) anzusteuern.

Die Filterkammern 1 (a, b, c) erhalten im Entstaubungsbetrieb staubbeladenes Gas in Richtung 23 zugeführt, das als Reingas 24 die Filterkammern 1 (a, b, c) verlässt. Die Gasreinigung erfolgt in den Filterschläuchen 25a, 25b, 25c, 25d. Der ausgefilterte Staub fällt in Behälter 26. Während oder ausserhalb der Entstaubungszeit werden nunmehr die Filterschläuche 25 (a, b, c, d) mittels Spüldüsen 27, die jeweils über dem betreffenden Filterschlauch 25 (a, b, c, d) angeordnet sind, über einen impulsartigen Luftstrom gereinigt.

Nach Ansteuerung der Elektromagnetventile 9 (a, b, c) in der vorprogrammierten Reihenfolge entsprechend dem in die Magnetventilsteuerung 22 eingegebenen Programm erzeugt das Öffnen der Membranventile 3 (a, b, c) den impulsartigen Druckluftaustritt innerhalb eines Zeitraumes von 40 bis 100 ms und damit einen Körperschall-Impuls, der durch den Impulsgeber 15 (a, b, c) aufgenommen wird. Der elektrische Teil der Einrichtung ist hierbei so eingestellt, dass nach Ansteuern eines der Elektromagnetventile 9 (a, b, c) der Körperschall-Impuls innerhalb einer einstellbaren Zeit, z.B. von ca. 500 ms einlaufen muss. Dieser Impuls wird danach dem betreffenden angesteuerten Elektromagnetventil 9 (a, b, c) bzw. dessen Membranventil 3 (a, b, c) zugeordnet und bedeutet «Ventil öffnet». Falls innerhalb der vorgesehenen Zeit von ca. 500 ms kein Schallimpuls erfolgt, wird das angesteuerte Membranventil 3 (a, b, c) durch Signale der akustischen Anzeige 19, der optischen Anzeige 20 oder dem Schreibgerät 21 als gestört gemeldet. Falschimpulse, die durch irgendwelche Schallquellen ausserhalb des Bereiches der Druckluftspeicher 2 (a, b, c) bzw. der Membranventile 3 (a, b, c) verursacht werden, können nicht zu Störmeldungen führen.

Entsprechend der Anzahl der vorhandenen Membranventile 3 (a, b, c) ist die Art des Gerätes zur Sichtbarmachung der Störsignale zu wählen.

Die Erfindung ist besonders günstig in der Hüttenindustrie und in der Zementindustrie sowie in thermischen Kraftwerken anwendbar.

## Patentansprüche

1. Einrichtung zur Überwachung der Schliess- und Öffnungsfunktionen von Membranventilen, insbesondere von Membranventilen, die in Abreinigungsimpulsleitungen von Entstaubungseinrichtungen einem Druckluftspeicher nachgeschaltet sind, die jeweils mittels Elektromagnetventilen steuerbar sind,
dadurch gekennzeichnet,
dass am Membranventilgehäuse (3d) bzw. am Gehäuse des Druckluftspeichers (2a, 2b, 2c) ein Schwingungen bzw. Geräusche aufnehmender Impulsgeber (15a, 15b, 15c) befestigt ist und dass die angegebenen Impulse mit programmierten Einzelsteuerungssignalen für die Elektromagnetventile (9a, 9b, 9c) einzeln vergleichbar sind.

2. Einrichtung nach Anspruch 1,
dadurch gekennzeichnet,
dass der Impulsgeber (15a, 15b, 15c) aus einem Körperschall-Mikrofon besteht.

3. Einrichtung nach den Ansprüchen 1 und 2,
dadurch gekennzeichnet,
dass bei Anwendung in einer Entstaubungseinrichtung entweder jeder Druckspeicher (2a, 2b, 2c) oder jedes Membranventil (3a, 3b, 3c), die einer Filterkammer (1a, 1b, 1c) zugeordnet sind, mit einem Impulsgeber (15a, 15b, 15c) versehen sind, dass ferner die Impulsgeber (15a, 15b, 15c) an einen Ladungsverstärker (17) und dieser an einen Impulsumwandler (18) angeschlossen sind und dass ausserdem das ermittelte Signal im Verlgeich mit der Magnetventilsteuerung (22) als Anzeige (19, 20, 21) einer Störmeldung erkennbar gemacht ist.

4. Einrichtung nach den Ansprüchen 1 bis 3,
dadurch gekennzeichnet,
dass die Membranventile (3a, 3b, 3c) ausgangsseitig mit den Spüldüsen (27) von Filterkammern (1a, 1b, 1c) der Entstaubungseinrichtung verbunden sind, wobei jeweils mehrere Filterschläuche (25a, 25b, 25c, 25d) einer Filterkammer und jeder Filterkammer (1, 1b, 1c) zumindest ein Membranventil (3a, 3b, 3c) zugeordnet sind.

## Claims

1. Equipment for monitoring the closing and opening functions of diaphragm valves, especially of diaphragm valves which follow an accumulator in the cleaning pulse lines of dust collection systems, the diaphragm valves being controllable by means of solenoid valves, characterized by a vibration-/noise-receiving pulse generator (15a, 15b, 15c) being fixed to the diaphragm valve housing (3d) and/or the housing of the accumulator (2a, 2b, 2c), and the transmitted pulses being individually comparable with programmed individual control signals for the solenoid valves (9a, 9b, 9c).

2. Equipment according to claim 1, characterized by the pulse generator (15a, 15b, 15c) consisting of a surface microphone.

3. Equipment according to claims 1 and 2, characterized by either each accumulator (2a, 2b, 2c) or each diaphragm valve (3a, 3b, 3c) associated with a filter chamber (1a, 1b, 1c) being provided with a pulse generator (15a, 15b, 15c) – when used in a dust collection system – and, further, the pulse generators (15a, 15b, 15c) being connected to a charge amplifier (17) which, in turn, is connected to a pulse convertor (18) and, further, the transmitted signal, in comparison with the solenoid valve control (22), being displayed as an indication (19, 20, 21) of a fault.

4. Equipment according to claims 1 to 3, characterized by the discharge side of the diaphragm valves (3a, 3b, 3c) being connected with the flushing nozzles (27) of the filter chamber (1a, 1b, 1c) of the dust collection system with invariably several filter bags (25a, 25b, 25c, 25d) being associated with one filter chamber and each filter chamber (1, 1b, 1c) being associated with at least one diaphragm valve (3a, 3b, 3c).

**Revendications**

1. Dispositif pour le contrôle des fonctions ouverture et fermeture de soupapes à diaphragme, en particulier de soupapes à diaphragme installées en aval d'un accumulateur d'air sous pression, dans les lignes d'impulsions de systèmes de dépoussiérage, et commandables par l'intermédiaire d'électrovannes, caractérisé par le fait que sur le corps de soupape (3d) et/ou de l'accumulateur (2a, 2b, 2c) est fixé un générateur d'impulsions (15a, 15b, 15c) récepteur de vibrations/bruits, et que les impulsions transmises sont comparables individuellement avec chacun des signaux programmés de commande des électrovannes (9a, 9b, 9c).

2. Dispositif suivant spécification 1, caractérisé par le fait que le générateur d'impulsions (15a, 15b, 15c) est constitué d'un microphone de détection acoustique.

3. Dispositif suivant spécifications 1 et 2, caractérisé par le fait que dans les cas d'utilisation dans un système de dépoussiérage chaque accumulateur (2a, 2b, 2c) ou chaque soupape (3a, 3b, 3c), lié/liée à une chambre de filtrage (1a, 1b, 1c), est muni/munie d'un générateur d'impulsions (15a, 15b, 15c), les générateurs d'impulsions (15a, 15b, 15c) étant raccordés à un amplificateur de charge (17), lui-même raccordé à un convertisseur d'impulsions (18), le signal transmis en comparaison avec la commande d'électrovanne (22) apparaissant en outre dans l'affichage (19, 20, 21) d'une signalisation de perturbations.

4. Dispositif suivant spécifications 1 à 3, caractérisé par le fait que le côté sortie des soupapes de diaphragme (3a, 3b, 3c) est relié aux gicleurs (27) des chambres à filtres (1a, 1b, 1c) du système de dépoussiérage, chaque chambre (1, 1b, 1c) comportant plusieurs manches de filtrage (25a, 25b, 25c, 25d) et raccordée à au moins une soupape à diaphragme (3a, 3b, 3c).

0 020 949